Europäisches Patentamt

European Patent Office

Office européen des brevets

(19)

(11) Numéro de publication: **0 214 002 B1**

(12) **FASCICULE DE BREVET EUROPEEN**

(45) Date de publication du fascicule du brevet: **18.10.89**

(51) Int. Cl.⁴: **B60R 22/06, B60R 22/24**

(21) Numéro de dépôt: **86401640.7**

(22) Date de dépôt: **22.07.86**

(54) **Dispositif d'ancrage d'un ensemble coulissant comportant un pène, notamment pour dispositif de ceinture de sécurité passive.**

(30) Priorité: **26.07.85 FR 8511494**

(43) Date de publication de la demande:
**11.03.87 Bulletin 87/11**

(45) Mention de la délivrance du brevet:
**18.10.89 Bulletin 89/42**

(84) Etats contractants désignés:
**DE GB IT SE**

(56) Documents cités:
**DE-A- 2 749 417**
**DE-A- 2 942 207**
**DE-A- 3 105 480**
**FR-A- 2 512 679**
**GB-A- 2 024 606**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Betencourt, Joseph Julien, Autechaux-Roide, F-25150 Pont-de-Roide(FR)**

(74) Mandataire: **Moncheny, Michel et al, c/o Cabinet Lavoix 2 Place d'Estienne d'Orves, F-75441 Paris Cedex 09(FR)**

ACTORUM AG

## Description

La présente invention concerne les dispositifs de ceinture de sécurité passive notamment pour véhicule automobile et elle se rapporte plus particulièrement à un dispositif d'ancrage d'un ensemble coulissant entrant dans la constitution de tels dispositifs.

On connaît, dans l'état de la technique un dispositif d'ancrage d'un ensemble coulissant comportant un pêne, utilisable notamment dans un dispositif de ceinture de sécurité passive pour siège de véhicule automobile, du type comprenant une sangle formant baudrier enroulée à une extrémité par un enrouleur et portant à son extrémité libre une boucle coopérant avec le pêne, l'ensemble coulissant étant monté déplaçable dans un rail de guidage et de retenue solidaire de la carrosserie du véhicule, entre une position d'attente dans laquelle un utilisateur a accès à son siège et une position active de retenue de l'utilisateur sur son siège, sous l'effet de moyens d'actionnement comportant une courroie reliant l'ensemble coulissant à des moyens d'entraînement, ce dispositif comportant également une pièce de maintien du pêne, solidement fixée à la caisse du véhicule, et coopérant avec le pêne, en position active, de manière à résister à des efforts de traction importants exercés sur le pêne.

Cependant, ces dispositifs présentent un certain nombre d'inconvénients, notamment au niveau de la sécurité des passagers, par exemple lors d'un accident avec retournement du véhicule, car la retenue de l'ensemble coulissant en position active n'est assurée que par les moyens d'actionnement.

On connaît également d'après les documents DE-A 3105 480, DE-A 3019 158, DE-A 2942 207 et GB-A 2024 606, un certain nombre de dispositifs d'ancrage d'ensembles coulissants, comportant des moyens de blocage de ces ensembles coulissants en position, adaptés pour empêcher le déplacement de deux-ci dans une direction parallèle au rail de guidage et de retenue. Cependant la structure de ces dispositifs est telle qu'ils n'assurent pas de façon parfaitement fiable le blocage en position active des ensembles coulissants.

En particulier le document DE-A-2 942 207 décrit un dispositif d'ancrage monté dans une embase approximativement en U destinée à être fixée au véhicule et sur laquelle est monté un axe où est articulé un loquet basculant prévu pour retenir en position active un pêne associé à sangle. En cas de choc tous les efforts de la sangle sont transmis indirectement au véhicule par l'entremise de l'embase via cet axe.

D'autre part, ce document expose une solution où la courroie qui entraîne l'ensemble coulissant présente, en position active de ce dernier, une partie qui est parallèle à la tranche antérieure de l'embase. Une telle architecture ne permet pas de mettre à contribution la tension développée dans cette courroie notamment au moment où l'ensemble coulissant doit quitter sa position active.

Le but de l'invention est donc de résoudre les problèmes évoqués en assurant en particulier une sécurité accrue à l'aide d'une solution grâce à laquelle les efforts ne sont plus transmis par l'intermédiaire d'un axe et où la tension développée dans la courroie est mise à contribution.

L'invention a pour objet un dispositif d'ancrage du type de celui exposé dans le préambule de la revendication 1 et dont les particularités ressortent, notamment, de la partie caractérisante de celle-ci.

L'invention sera mieux comprise à l'aide de la description qui va suivre, donnée uniquement à titre d'exemple et faite en se référant aux dessins annexés, sur lesquels:

– la Fig. 1 est une vue schématique en perspective de l'habitacle d'un véhicule automobile équipé d'un dispositif de ceinture de sécurité passive;

– la Fig. 2 représente une vue de côté d'un ensemble coulissant pouvant être utilisé avec un dispositif d'ancrage selon l'invention;

– la Fig. 3 représente une vue de face de l'ensemble coulissant représenté sur la Fig. 2;

- la Fig. 4 représente une vue de dessus d'un coulisseau et d'un pêne entrant dans la constitution de l'ensemble coulissant représenté sur les Fig. 2 et 3;

- la Fig. 5 représente un ensemble coulissant dans une certaine position d'un rail de guidage et de retenue;

- la Fig. 6 représente une vue de face d'un dispositif d'ancrage selon l'invention;

- la Fig. 7 représente une vue en coupe suivant la ligne A-A de la Fig. 6 et dans laquelle l'ensemble coulissant est représenté en position active;

- les Fig. 8 à 13 sont des vues en coupe suivant la ligne B-B de la Fig. 7 et illustrant le fonctionnement des moyens de blocage entrant dans la constitution d'un dispositif d'ancrage selon l'invention;

- la Fig. 14 représente des moyens de détection de la présence de l'ensemble coulissant en position active; et

- la Fig. 15 représente des moyens de détection de la présence de la boucle en position active.

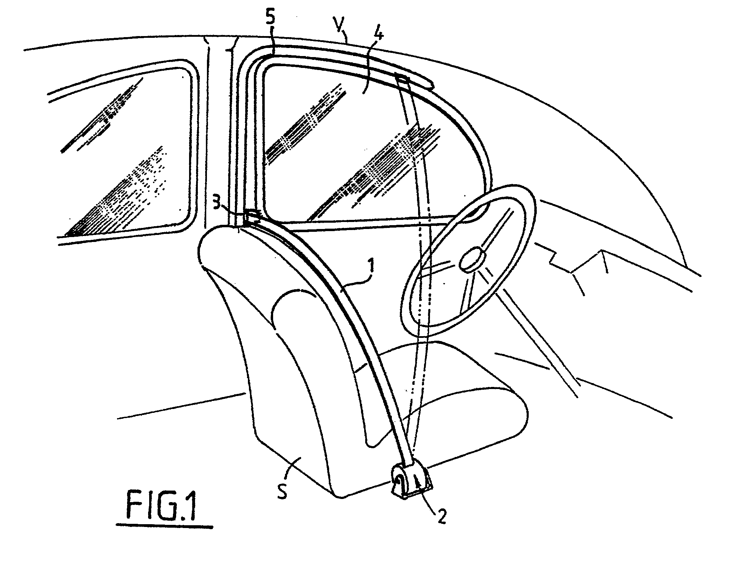

Sur la Fig. 1, on a représenté schématiquement un véhicule V dont le siège du conducteur S est équipé d'un dispositif de ceinture de sécurité passive.

La ceinture de sécurité passive comprend une sangle 1 formant baudrier dont une extrémité est enroulée sur un enrouleur 2 disposé du côté intérieur du siège S. A son extrémité libre, opposée à l'enrouleur 2, la sangle 1 porte une boucle 3 qui coopère avec un pêne solidaire d'un ensemble coulissant (non représenté), se déplaçant autour d'une porte 4 dans un rail creux 5 de guidage et de retenue dont une partie est disposée contre le montant vertical de la caisse du véhicule V et dont une autre partie est appuyée contre le bord extérieur du pavillon au-dessus de l'embrasure de la porte.

Cet ensemble coulissant est monté déplaçable dans le rail de guidage et de retenue, entre une position d'attente représentée en traits mixtes sur la Fig. 1, dans laquelle un utilisateur a accès à son siège et une position active, représentée en traits pleins, de retenue de l'utilisateur sur son siège, sous l'effet de moyens d'actionnement (non représentés) comportant une courroie reliant l'ensemble coulissant à des moyens d'entraînement. Une pièce de maintien du pène, solidement fixée à la caisse du véhicule, est prévue dans la position active de retenue, de manière à coopérer avec le pène pour résister à des efforts de traction importants exercés sur celui-ci.

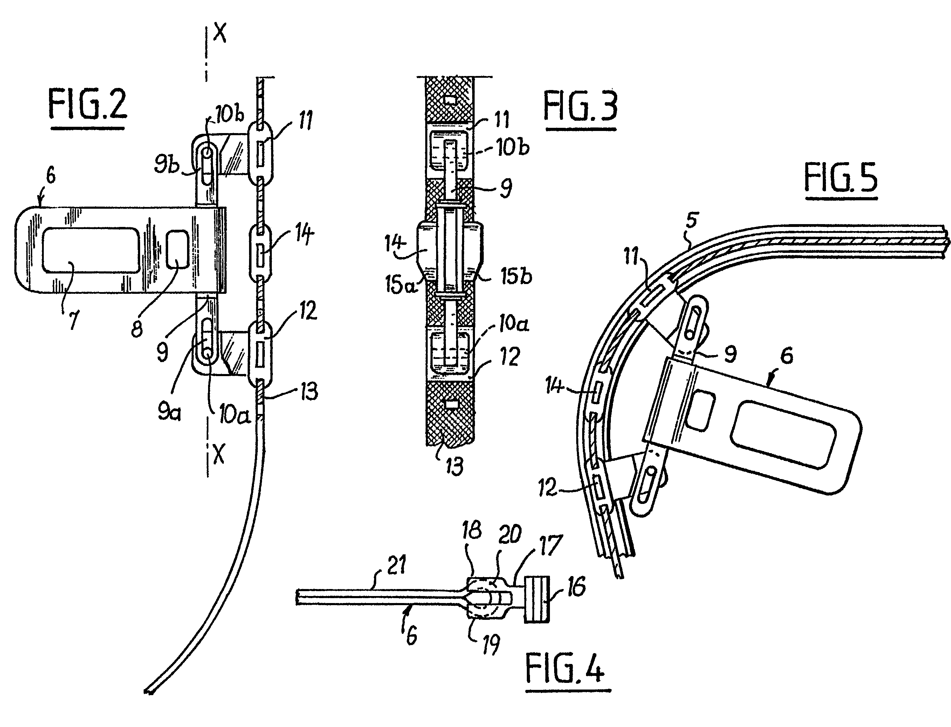

Ainsi qu'on peut le voir sur la Fig. 2, l'ensemble coulissant comporte un pène 6 présentant un premier évidement 7 destiné a coopérer avec la boucle solidaire de la sangle de ceinture de sécurité et un second évidement 8 dont la fonction sera définie par la suite. Ce pène 6 est monté articulé sur une tige 9 dont chaque extrémité comporte un méplat pourvu d'une lumière 9a, 9b. Des doigts d'articulation 10a et 10b peuvent se déplacer respectivement dans les lumières 9a et 9b de la tige 9, ces doigts d'articulation étant solidaires de coulisseaux 11 et 12 surmoulés sur une courroie 13 faisant partie des moyens d'actionnement de l'ensemble coulissant. Ces coulisseaux 11 et 12 coopèrent donc avec le rail de guidage et de retenue et avec les moyens d'actionnement pour déplacer ledit ensemble coulissant le long du rail.

Comme on peut le voir plus particulièrement sur la Fig. 3, les doigts d'articulation 10a et 10b s'étendent à peu près perpendiculairement par rapport à la tige 9.

Un organe d'actionnement 14 est également surmoulé sur la courroie 13 et présente des plans inclinés 15a et 15b dont la fonction sera définie par la suite.

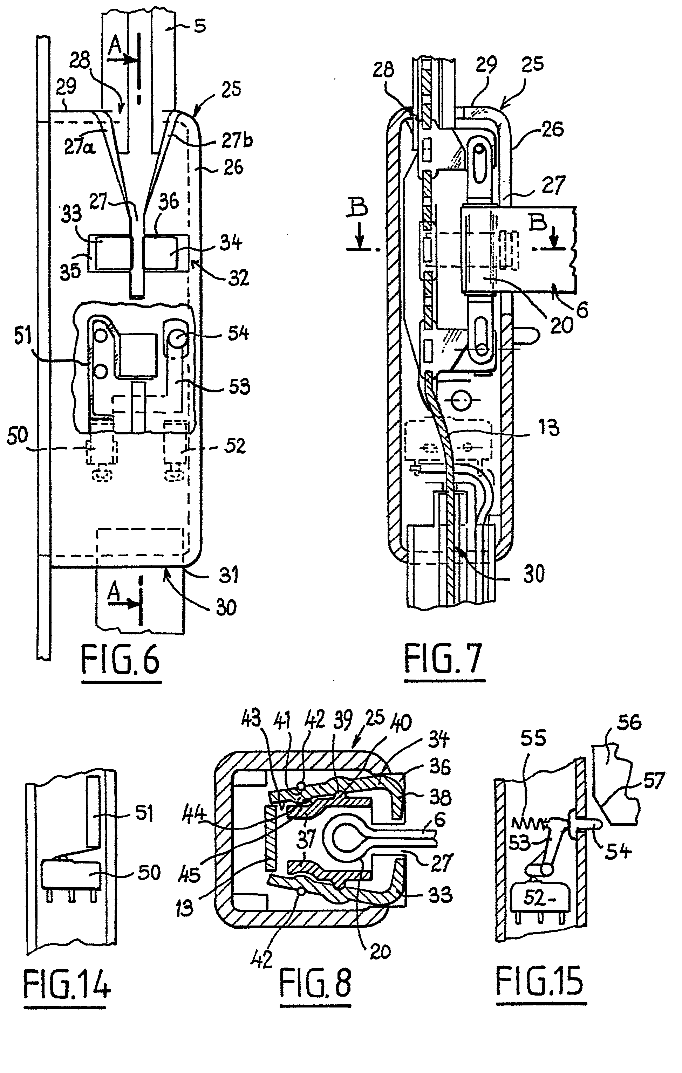

Chaque coulisseau (Fig. 4) comporte une embase 16 engagée dans le rail de guidage, et à partir de laquelle s'étend un bras d'accrochage 17 faisant saillie hors du rail de guidage et à l'extrémité duquel sont formées deux branches 18 et 19 entre lesquelles est engagé le méplat de l'extrémité correspondante de la tige et entre lesquelles s'étend le doigt d'articulation correspondant.

Le pène 6 est constitué par une lame métallique repliée à 180°, comportant au niveau du pliage, un renflement 20 délimitant un passage à peu près cylindrique pour la tige 9 et à partir duquel s'étend une portion plane 21 coopérant avec la boucle. Il est à noter que le pène 6 est retenu longitudinalement sur la tige 9 par des dispositifs connus et non représentés. Le pène 6 est donc monté articulé autour d'un axe X-X (Fig. 2) à peu près parallèle au rail de guidage.

Comme on peut le voir sur la Fig. 5, cette structure de l'ensemble coulissant permet de passer des coudes, reliant la partie du rail de guidage disposée contre le montant vertical de la caisse du vehicule et la partie de celui-ci appuyée contre le bord supérieur du pavillon au-dessus de l'embrasure de la porte, dont la courbure est relativement importante. En effet, cette structure de l'ensemble coulissant permet de passer des coudes dont le rayon est de l'ordre de 40 mm.

Bien que dans le mode de réalisation décrit, le pène soit monté articulé sur une tige elle-même articulée sur deux coulisseaux, il peut également être monté articulé sur une tige solidaire d'un seul coulisseau se déplaçant dans le rail de guidage.

Sur la Fig. 6, on a représenté un dispositif d'ancrage d'un tel ensemble coulissant, comportant une pièce de maintien du pène, solidement fixée à la caisse du véhicule, dans la position active de retenue de l'utilisateur sur son siège, de manière à résister à des efforts importants exercés sur le pène. Cette pièce de maintien est constituée par un boîtier 25 comprenant une face avant 26 dans laquelle est ménagée une fente 27 à travers laquelle fait saillie le pène, et dont les rebords définissent deux surfaces de portée destinées à coopérer avec le pène, et plus particulièrement avec le renflement 20 de celui-ci, pour encaisser les efforts de traction exercés sur ce pène. Cette fente communique avec une première ouverture 28 ménagée dans une première face latérale 29 du boîtier, et alignée avec le rail 5 de guidage et de retenue pour permettre le passage de l'ensemble coulissant.

Le boîtier 25 comprend également une seconde ouverture 30 ménagée dans une seconde face latérale 31 de celui-ci, destinée à permettre le passage d'une partie de la courroie s'étendant entre l'ensemble coulissant et les moyens d'entraînement.

Ce dispositif d'ancrage comporte également des moyens de blocage 32 de l'ensemble coulissant, en position active, adaptés pour empêcher le déplacement de celui-ci dans une direction parallèle au rail de guidage et de retenue.

Ces moyens de blocage sont constitués par au moins un organe de blocage, et dans le mode de réalisation représenté par deux organes de blocage 33 et 34, disposés dans des logements 35 et 36, ménagés dans la face avant 26 du boîtier. Ces organes de blocage sont montés déplaçables entre une position escamotée permettant l'introduction ou le retrait du pène de la position active et une position de blocage, dans laquelle des parties actives de ces organes coopèrent avec des parties complémentaires du pène et avec les logements pour retenir le pène en position active.

Ainsi qu'il est représenté sur cette Fig. 6, les organes de blocage 33 et 34 sont disposés de part et d'autre de la fente 27 dans les logements 35 et 36 ménagés dans les rebords de celle-ci.

Sur la Fig. 7 on a représenté une vue en coupe suivant la ligne A-A de la Fig. 6 et dans laquelle l'ensemble coulissant est représenté en position active, c'est à dire engagé dans le boîtier 25. Le pène 6 fait alors saillie au-dehors du boîtier 25 à travers la fente 27 et son renflement 20 peut venir en appui contre les rebords de cette fente 27 définissant les deux surfaces de portée du boîtier.

Ainsi qu'on peut le voir sur cette Fig. 7, la première ouverture 28 et la seconde ouverture 30 du boîtier, sont ménagées à des distances différentes de la face avant 26 de celui-ci, de sorte que la partie de la courroie 13 s'étendant entre l'ensemble coulissant et la seconde ouverture, est coudée et s'étend en oblique par rapport à la face avant du boîtier, de manière que lorsqu'une poussée est exercée sur cette courroie, pour dégager l'ensemble coulissant de sa position active, celui-ci soit repoussé vers le fond du boîtier 25.

Une description plus détaillée du fonctionnement de ce dispositif d'ancrage va maintenant être donnée en se référant aux Fig. 8 à 13.

Comme on le voit sur la Fig. 8, qui représente les organes de blocage en position escamotée, le pène 6 fait saillie hors du boîtier 25 à travers la fente 27. Le renflement 20 du pène vient en appui contre les rebords de cette fente 27 lorsqu'une traction est exercée sur le pène, tendant à le faire sortir du boîtier 25. Ce boîtier 25 comporte un organe intérieur comprenant deux pièces 37, solidaires du boîtier et entre lesquelles est disposé le renflement 20 du pène.

Les organes de blocage 33 et 34 sont logés entre les pièces 37 de l'organe intérieur et le boîtier 25.

Chaque organe de blocage est constitué par une lame métallique comportant à l'une de ses extrémités, une partie repliée à 90° formant crochet, constituant la partie active de celui-ci et destinée à s'engager dans l'évidement 8 du pène, en position de blocage. Les organes de blocage 33 et 34 étant identiques, seul l'organe de blocage 34 va maintenant être décrit en détail.

Cet organe de blocage 34 comporte donc une partie repliée à 90°, 38, faisant saillie hors du boîtier 25 à travers le logement 36 prévu à cet effet dns la face avant du boîtier. Dans sa partie centrale, cet organe de blocage présente une surface d'articulation, constituée par un premier décrochement 39, prenant appui sur des surfaces correspondantes, constituées par un premier bossage 40 de la pièce 37 correspondante de l'organe intérieur. L'organe de blocage 34 comporte à son autre extrémité une première surface d'appui, constituée par un second décrochement 41, coopérant avec des moyens élastiques 42 sollicitant l'organe de blocage vers sa position escamotée, et une seconde surface d'appui constituée par une portion plane 43 de celui-ci et destinée à coopérer avec l'organe d'actionnement 14 décrit en référence aux Fig.2 et 3, et solidaire de l'ensemble coulissant, pour déplacer et maintenir l'organe de blocage dans sa position de blocage.

Il est à noter que les première et seconde surfaces d'appui de chaque organe de blocage sont formées sur des faces opposées de la lame métallique et que les moyens élastiques sont avantageusement constitués par un ressort en forme de U, 42, dont les branches sont en appui contre les premières surfaces d'appui des deux organes de blocage pour exercer sur celles-ci une action dirigée vers l'intérieur du boîtier et amener chaque organe de blocage en position escamotée.

La surface d'articulation et la seconde surface d'appui de chaque organe de blocage sont formées sur la face de celui-ci, dirigée vers l'intérieur du boîtier.

Chaque organe de blocage comporte également, entre sa surface d'articulation et sa seconde surface d'appui, un second bossage 44 destiné à venir en appui dans un logement 45 prévu dans la pièce correspondante de l'organe intérieur, en position escamotée de l'organe de blocage, ce second bossage étant ménagé dans l'organe de blocage en regard du second décrochement 41 constituant la première surface d'appui de l'organe de blocage.

Comme on peut le voir sur cette Fig.8, la courroie 13 reliant l'ensemble coulissant aux moyens d'actionnement, est disposée entre les secondes surfaces d'appui des deux organes de blocage.

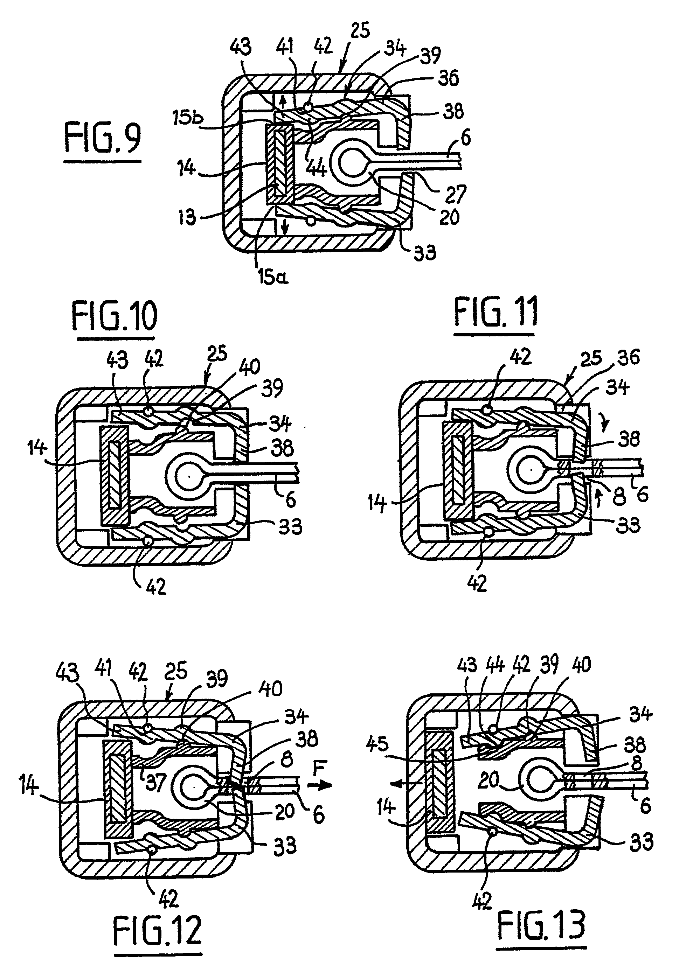

Si l'on se reporte maintenant à la Fig.9, on constate que lorsque l'ensemble coulissant s'engage plus profondément dans le boîtier, l'organe d'actionnement 14 et plus particulièrement les plans inclinés 15a et 15b de celui-ci, viennent écarter les secondes surfaces d'appui 43 des organes de blocage 33 et 34 qui, sous l'action du ressort 42, ont tendance à basculer autour de leur surface d'articulation correspondante pour que la partie repliée à 90° formant crochet se rapproche du pène 6.

L'engagement de l'ensemble coulissant dans le boîtier se poursuivant (Fig. 10), l'organe d'actionnement 14 écarte de plus en plus les secondes surfaces d'appui des organes de blocage 33 et 34, de sorte que les parties repliées à 90°, 38, viennent en appui contre la partie pleine du pène 6. Dans cette position, le décrochement 39 de l'organe de blocage n'est plus en appui contre le bossage 40 de l'organe intérieur, mais le ressort 42 exerce une action qui tend à maintenir les organes de blocage 33 et 34 dans cette position.

Lorsque l'évidement 8 du pène (Fig. 11 et 12) arrive en regard des parties repliées formant crochet 38, des organes de blocage 33 et 34, l'organe d'actionnement 14 maintenant la position relative des secondes surfaces d'appui de ces organes, le ressort 42 exerce une action qui amène ces parties repliées à 90° à pénétrer dans cet évidement 8. Lorsque ce déplacement est terminé, (Fig. 12) chaque organe de blocage 33 et 34 est donc en appui par sa surface d'articulation 39 sur le bossage 40 correspondant de l'organe intérieur, sa seconde surface d'appui 43 est maintenue en positon relative par rapport à la surface correspondante de l'autre organe, par l'intermédiaire de l'organe d'actionnement 14, et sa première surface d'appui 41 est soumise à l'action du ressort 42 qui tend à rapprocher les organes l'un de l'autre et donc à maintenir la partie repliée à 90°, 38, à l'intérieur de l'évidement 8 du pène.

Il est à noter que les organes de blocage 33 et 34 n'assurent aucune fonction de retenue du pène lorsqu'un effort F (Fig. 12) est exercé sur celui-ci, tendant à le faire sortir du boîtier 25. Dans ce cas, le renflement 20 du pène vient en appui contre les deux surfaces de portée du boîtier qui encaissent les efforts exercés sur ce pène.

Les organes de blocage 33 et 34 assurent la retenue et le blocage du pène en position active et empêchent celui-ci de se déplacer dans une direction parallèle au rail de guidage et de retenue en coopérant avec les rebords de l'évidement 8 du pène et avec les logements 35 et 36 pour le maintenir en position active.

Le déblocage du pène s'effectue de la façon suivante.

Etant donné que la partie de la courroie 13 s'étendant entre l'ensemble coulissant et la seconde ouverture du boîtier est coudée et s'étend en oblique par rapport à la face avant du boîtier, une poussée exercée sur cette partie de la courroie, par l'intermédiaire des moyens d'entraînement, pour dégager l'ensemble coulissant de sa position active, repousse cet ensemble vers le fond du boîtier. L'organe d'actionnement 14 (Fig. 13) des organes de blocage 33 et 34, solidaire de cet ensemble coulissant est alors également repoussé vers le fond du boîtier de sorte qu'il libère les secondes surfaces d'appui 43 des organes de blocage 33 et 34, qui sont alors ramenés vers leur position escamotée sous l'effet de l'action du ressort en forme du U, 42. Les organes de blocage 33 et 34 basculent alors autour des pièces de l'organe intérieur pour que le second bossage, 44, de ceux-ci viennent en appui dans le logement 45 prévu à cet effet dans les pièces de l'organe intérieur, en position escamotée. Les parties repliées à 90°, 38, se dégagent alors de l'évidement 8 du pène 6 de façon à libérer celui-ci et l'ensemble coulissant peut se déplacer dans le boîtier, vers le rail de guidage et de retenue 5.

Il est à noter que la fente 27 (Fig. 6) peut avantageusement présenter des rebords inclinés 27a et 27b au niveau de sa jonction avec la première ouverture 28 du boîtier, ces rebords étant destinés à guider le pène lors de son introduction dans le boîtier.

Des moyens de détection de la présence de l'ensemble coulissant en position active, peuvent également être prévus dans le boîtier. Ces moyens (Fig. 10 et 14) peuvent être constitués par un interrupteur 50 disposé à l'intérieur dudit boîtier et actionné par l'ensemble coulissant par l'intermédiaire d'une lame ressort 51 sur laquelle vient prendre appui, par exemple, le coulisseau 12 de l'ensemble coulissant, en position active de celui-ci. Cet interrupteur 51 peut être destiné par exemple à assurer la coupure de l'alimentation des moyens d'entraînement de la courroie lorsque l'ensemble coulissant est en position active.

De plus, il peut également être prévu à l'intérieur de ce boîtier des moyens de détection de la présence de la boucle en position active. Ces moyens, représentés sur les Fig. 10 et 15, sont constitués par un interrupteur 52 actionné par un bras d'actionnement 53 et un poussoir 54 faisant saillie sur la face avant du boîtier au niveau de la position active du pène, le bras d'actionnement et le poussoir étant sollicités par un ressort 55. L'interrupteur 52 est alors actionné lors de la venue en position active d'une boucle 56 comportant une rampe 57 venant enfoncer le poussoir 54 et donc actionner le bras 53. L'information fournie par cet interrupteur 52 peut, par exemple, être utilisée pour indiquer par tout moyen connu en soi la présence ou l'absence de la boucle en position active.

### Revendications

1. Dispositif d'ancrage d'un ensemble coulissant comportant un pène (6), utilisable dans un dispositif de ceinture de sécurité passive pour siège de véhicule automobile, du type comprenant une sangle (1) formant baudrier enroulée à une extrémité par un enrouleur (2) et portant à son extrémité libre une boucle (3 ; 56) coopérant avec le pène (6), l'ensem-ble coulissant étant monté déplaçable dans un rail de guidage et de retenue (5) solidaire de la carrosserie du véhicule (V), entre une position d'attente dans laquelle un utilisateur a accès à son siège (S) et une position active de retenue de l'utilisateur sur son siège, sous l'effet de moyens d'actionnement comportant une courroie (13) reliant l'ensemble coulissant à des moyens d'entraînement, une pièce de maintien du pène (6) solidement fixée à la caisse du véhicule coopérant avec le pène en position active de manière à résister à des efforts de traction exer-cés sur le pène, ledit dispositif comportant des moyens de blocage (32) de l'ensemble coulissant en position active, adaptés pour empêcher le déplacement de celui-ci dans une direction parallèle au rail de guidage et de retenue (5) et la pièce de maintien étant disposée entre le rail de guidage (5) et les moyens d'entraînement de l'ensemble coulissant où la pièce de maintien comporte un boîtier (25) comprenant une face avant (26) dans laquelle est ménagée une fente (27) à travers laquelle fait saillie le pène (6) et qui communique avec une première ouverture (28) ménagée dans une première face latérale (29) du boîtier (25) et alignée avec le rail de guidage et de retenue (5) pour permettre le passage de l'ensemble coulissant, le boîtier (25) comprenant une seconde ouverture (30) ménagée dans une seconde face latérale (31) de celui-ci, destinée à permettre le passage d'une partie de la courroie (13) et où les moyens de blocage sont constitués par au moins un organe de blocage (33, 34) monté articulé dans la face avant (26) du boîtier à proximité de la fente (27), le ou chaque organe de blocage (33, 34) étant monté déplaçable entre une position escamotée permettant l'introduction ou le retrait du pène (6) de la position active et une position de blocage dans laquelle des parties actives (38) du ou de chaque organe (33, 34), coopérent par engagement avec des parties complémentaires (8) du pène (6) caractérisé en ce que la fente (27) présente des rebords qui définissent deux surfaces de portée destinées à coo-pérer avec le pène pour encaisser les efforts de traction exercés sur celui-ci, en ce que le ou les organes de blocage (33, 34) sont montés dans un logement (35, 36) correspondant du boîtier (25) avec lequel il(s) coopère(nt) pour immobiliser le pène (6) en position active, en ce que le ou les organes de blocage (33, 34) est (sont) articulé(s) selon un axe de basculement parallèle à la fente (27) et est muni d'une extrémité (38) destinée à s'engager dans un évidement (8) du pène (6) et en ce que les première (28) et seconde (30) ouvertures du boîtier (25) sont ménagées à des distances différentes de la face avant (26) de celui-ci de manière que la partie de la courroie (13) s'étendant entre l'ensemble coulissant et la seconde ouverture (30) soit coudée et oblique par rapport à cette face avant (26).

2. Dispositif d'ancrage selon la revendication 1, caractérisé en ce que les moyens de blocage sont constitués par deux organes de blocage (33,34) disposés de part et d'autre de la fente (27) dans des logements (35,36) ménagés dans les rebords de celle-ci.

3. Dispositif d'ancrage selon la revendication 1 ou 2, caractérisé en ce qu'il comporte des moyens élastiques (42) sollicitant le ou chaque organe de blocage vers sa position escamotée.

4. Dispositif d'ancrage selon la revendication 3, caractérisé en ce que le ou chaque organe de blocage est constitué par une lame métallique comportant à l'une de ses extrémités une partie repliée à 90° formant crochet (38), constituant la partie active de celui-ci et destinée à s'engager dans un évidement (8) du pène (6) en position de blocage, dans sa partie centrale, une surface d'articulation (39) prenant appui sur des surfaces correspondantes (40) d'un organe intérieur (37) solidaire du boîtier et à son autre extrémité, une première surface d'appui (41) coopérant avec les moyens élastiques (42) sollicitant l'organe de blocage vers sa position escamotée et une seconde surface d'appui (43) destinée à coopérer avec un organe d'actionnement (14) solidaire de l'ensemble coulissant pour déplacer et maintenir l'organe de blocage dans sa position de blocage.

5. Dispositif d'ancrage selon la revendication 4, caractérisé en ce que les première et seconde surfaces d'appui sont formées sur des faces opposées de la lame métallique et en ce que les moyens élastiques sont constitués par un ressort (42) en forme de U dont les branches sont en appui contre les premières surfaces d'appui des deux organes de blocage.

6. Dispositif d'ancrage selon la revendication 5, caractérisé en ce que la surface d'articulation et la seconde surface d'appui de chaque organe de blocage sont formées sur la face de celui-ci, dirigée vers l'intérieur du boîtier (25), en ce que la surface d'articulation est constituée par un premier décrochement (39) formé dans la lame métallique, coopérant avec un premier bossage (40) de l'organe intérieur (37) et en ce que la seconde surface d'appui est constituée par une portion plane (43) de la lame métallique.

7. Dispositif d'ancrage selon la revendicacation 6, caractérisé en ce que le ou chaque organe de blocage comporte, entre sa surface d'articulation et sa seconde surface d'appui, un second bossage (44) destiné à venir en appui dans un logement (45) prévu dans l'organe intérieur (37) en position escamotée du ou de chaque organe de blocage, ce second bossage étant ménagé dans le ou chaque organe de blocage (33,34) en regard d'un second décrochment (41) constituant la première surface d'appui dudit organe.

8. Dispositif d'ancrage selon les revendications 1 à 7, caractérisé en ce que lorsqu'un effort est exercé sur cette courroie pour dégager l'ensemble coulissant de sa position active, l'organe d'actionnement (14) des organes de blocage (33,34) est dégagé de sa position de maintien desdits organes en position de blocage.

9. Dispositif d'ancrage selon l'une quelconque des revendications 4 à 8, caractérisé en ce que l'organe d'actionnement (14) comporte un plan incliné (15a, 15b) destiné à coopérer avec la seconde surface d'appui du ou de chaque organe de blocage.

10. Dispositif d'ancrage selon l'une quelconque des revendications 4 à 9, caractérisé en ce que l'organe d'actionnement (14) est surmoulé sur la courroie (13).

11. Dispositif d'ancrage selon l'une quelconque des revendications précédentes, caractérisé en ce que la fente (27) présente des rebords inclinés (27a, 27b) au niveau de sa jonction avec la première ouverture (28), destinés à guider le pène (6) lors de son introduction dans le boîtier (25).

12. Dispositif d'ancrage selon l'une quelconque des revendications précédentes, caractérisé en ce qu'il comporte des moyens de détection de la présence de l'organe coulissant en position active.

13. Dispositif d'ancrage selon la revendication 14, caractérisé en ce que les moyens de détection sont constitués par un interrupteur (50) disposé dans ledit boîtier (25) et actionné par l'organe coulissant.

14. Dispositif d'ancrage selon l'une quelconque des revendications précédentes, caractérisé en ce qu'il comporte des moyens de détection de la présence de la boucle en position active.

15. Dispositif d'ancrage selon la revendication 14, caractérisé en ce que lesdits moyens sont constitués par un interrupteur (52) disposé dans ledit boîtier (25) et comportant un bras d'actionnement (53) et un poussoir (54) faisant saillie hors du boîtier (25) au niveau de la position active du pène, ce poussoir et cet interrupteur étant actionnés par une rampe (57) de la boucle (56) lors de la venue en position active de celle-ci.

## Patentansprüche

1. Verankerungsvorrichtung einer Gleiteinrichtung mit einem Riegel (6), die in einer passiven Sicherheitsgurtvorrichtung für Kraftfahrzeugsitze verwendbar ist, vom Typ mit einem Gurt (1), der ein Band bildet, das an einem Ende durch einen Aufroller (2) aufgerollt ist, und an seinem freien Ende einen Bügel (3; 56) trägt, der mit dem Riegel (6) zusammenwirkt, wobei die Gleiteinrichtung beweglich in einer Führungs- und Halteschiene (5) angeordnet ist, die mit der Fahrzeugkarosserie (V) verbunden ist, zwischen einer Wartestellung, in der ein Bediener Zutritt zu seinem Sitz (S) hat und einer Rückhaltestellung des Bedieners auf seinem Sitz unter der Einwirkung von Betätigungseinrichtungen, die einen Treibriemen (13) aufweisen, der die Gleiteinrichtung mit Antriebseinrichtungen verbindet, einem Halteteil des Riegels (6), der fest an dem Fahrzeuggehäuse befestigt ist, wobei es mit dem Riegel in der aktiven Stellung derart zusammenwirkt, daß es Zug- oder Antriebskräften widersteht, die auf den Riegel ausgeübt werden, wobei die genannte Vorrichtung Blockierungseinrichtungen (32) der Gleiteinrichtung in aktiver Stellung aufweist, die geeignet sind, seine Bewegung in einer zur Zuführungs- und Halteschiene (5) parallelen Richtung zur verhindern, und wobei das Halteteil zwischen dem Führungsteil (5) und den Antriebseinrichtungen der Gleiteinrichtung angeordnet ist, wo das Halteteil ein Gehäuse (25) aufweist, das eine Vorderseite (26) aufweist, in der eine Kerbe (27) ausgebildet ist, über die der Riegel (6) hervorsteht und die mit einer ersten Öffnung (28) zusammenwirkt, die in einer ersten Seitenfläche (29) des Gehäuses (25) ausgebildet und mit der Führungs- und Halteschiene (5) ausgerichtet ist, um die Passage der Gleiteinrichtung zu erlauben, wobei das Gehäuse (25) eine zweite Öffnung (30) aufweist, die in einer zweiten Seitenwand (31) von diesem ausgebildet ist, die dazu bestimmt ist, den Durchtritt eines Bereiches des Treibriemens (13) zu erlauben, und wo die Blockierungseinrichtungen durch wenigstens ein Blockierungsorgan (33, 34) gebildet sind, das gelenkig in der Vorderseite (26) des Gehäuses in der Nähe der Kerbe (27) angeordnet ist, wobei das oder jedes Blockierungsorgan (33, 34) beweglich zwischen einer eingezogenen Stellung, die die Einführung oder das Zurückziehen des Riegels (6) von der aktiven Position, und einer Blockierungsstellung erlaubt, in der die aktiven Bereiche (38) des oder jedes Organs (33, 34) durch Eingriff mit den komplementären Bereichen (8) des Riegels (6) zusammenwirken, dadurch gekennzeichnet, daß die Kerbe (27) Ränder aufweist, die zwei Tragflächen definieren, die dazu bestimmt sind, mit dem Riegel zusammenzuwirken, um die Antriebskräfte, die auf diesen ausgeübt sind, aufzufangen, daß das oder die Blockierungsorgane (33, 34) in einer Aufnahme (35, 36) montiert sind entsprechend dem Gehäuse (25), mit dem es oder sie zusammenwirkt bzw. -wirken, um den Riegel (6) in der aktiven Stellung unbeweglich zu machen, daß der oder die Blockierungsorgane (33, 34) gemäß einer Schwingachse parallel zur Kerbe (27) gelenkig ist (sind), und mit einem Ende (38) versehen ist, daß dazu bestimmt ist in eine Ausnehmung (8) des Riegels (6) einzugreifen, und daß die ersten (28) und zweiten (30) Öffnungen des Gehäuses (25) in unterschiedlichen Abständen von der Vorderseite (26) von diesem derart ausgebildet sind, daß der Bereich des Treibriemens (13), der sich zwischen der Gleiteinrichtung und der zweiten Öffnung (30) erstreckt, gekrümmt und geneigt ist bezüglich dieser Vorderseite (26).

2. Verankerungsvorrichtung nach Anspruch 1, dadurch gekennzeichnet, daß die Blockierungseinrichtungen durch zwei Blockierungsorgane (33, 34) gebildet sind, die einerseits und andererseits der Kerbe (27) in Aufnahmen (35, 36) angeordnet sind, die in den Rändern dieser ausgebildet sind.

3. Verankerungsvorrichtung nach Anspruch 1 oder 2, dadurch gekennzeichnet, daß sie elastische Einrichtungen (42) aufweist, die das oder jedes Blockierungsorgan in seine eingezogene Stellung drängen.

4. Verankerungsvorrichtung nach Anspruch 3, dadurch gekennzeichnet, daß das oder jedes Blockierungsorgan durch eine metallische Zunge gebildet ist, die an einem ihrer Enden einen um 90° umgeschlagenen einen Haken (38) bildenden Bereich aufweisen, der den aktiven Bereich von dieser bildet und dazu bestimmt ist in eine Ausnehmung (8) des Riegels (6) in Blockierungsstellung in seinem Mittenbereich einzugreifen, wobei eine Gelenkfläche (39) in Anschlag kommt gegen die entsprechenden Flächen (40) eines inneren Organs (37), das mit dem Gehäuse verbunden ist und an seinem anderen Ende eine erste Anschlagfläche (41) mit elastischen Einrichtungen (42) zusammenwirkt, die das Blockierungsorgan in seine eingezogene Position drängen und eine zweite Anschlagfläche (43) dafür bestimmt, ist mit einem Betätigungsorgan (14) zusammenzuwirken, das mit der Gleiteinrichtung verbunden ist, um das Blockierungsorgan in seiner Blockierungsstellung zu bewegen und zu halten.

5. Verankerungsvorrichtung nach Anspruch 4, dadurch gekennzeichnet, daß die erste und zweite Anschlagfläche an gegenüberliegenden Seiten der metallischen Zunge ausgebildet sind, und daß die elastischen Einrichtungen durch eine Feder (42) in U-Form gebildet sind, deren Schenkel in Anschlag gegen die erste Anschlagfläche der beiden Blockierungsorgane ist.

6. Verankerungsvorrichtung nach Anspruch 5, dadurch gekennzeichnet, daß die Gelenkfläche und die zweite Anschlagfläche eines jeden Blockierungsorgans an der Seite von diesem ausgebildet sind, die in das Innere des Gehäuses (25) gerichtet ist, daß die Gelenkfläche durch einen ersten Absatz (39) gebildet ist, der in der metallischen Zunge ausgebildet ist, die mit einem ersten Vorsprung (40) des inneren Organs (37) zusammenwirkt, und daß die zweite Anschlagfläche durch einen ebenen Bereich (43) der metallischen Zunge gebildet ist.

7. Verankerungsvorrichtung nach Anspruch 6, dadurch gekennzeichnet, daß das oder jedes Blockierungsorgan zwischen seiner Gelenkfläche und seiner zweiten Anschlagfläche einen zweiten Vorsprung (44) aufweist, der dazu bestimmt ist in Anschlag in einer Aufnahme (45) zu kommen, das im inneren Organ (37) in eingezogener Stellung des oder jedes Blockierungsorgans vorgesehen ist, wobei der zweite Vorsprung in dem oder jedem Blockierungsorgan (33, 34) gegenüber einem zweiten Absatz (41) ausgebildet ist, der die erste Anschlagfläche des Organs bildet.

8. Verankerungsvorrichtung nach den Ansprüchen 1 bis 7, dadurch gekennzeichnet, daß wenn eine Kraft auf dieses Treibband wirkt, um die Gleiteinrichtung aus ihrer aktiven Position zu bringen, das Betätigungsorgan (14) der Blockierungsorgane (33, 34) aus der Haltestellung der Organe in Blockierungsstellung gelöst wird.

9. Verankerungsvorrichtung nach einem der Ansprüche 4 bis 8, dadurch gekennzeichnet, daß das Betätigungsorgan (14) eine geneigte Ebene 15a, 15b) aufweist, die dazu bestimmt ist mit der zweiten Andruckfläche des oder jedes Blockierungsorgans zusammenzuwirken.

10. Verankerungsvorrichtung nach einem der Ansprüche 4 bis 9, dadurch gekennzeichnet, daß das Betätigungsorgan (14) auf dem Treibriemen (13) angeformt ist.

11. Verankerungsvorrichtung nach einem der vorhergehenden Ansprüche, dadurch gekennzeichnet, daß die Kerbe (27) geneigte Ränder (27a, 27b) auf der Höhe ihrer Verbindung mit der ersten Öffnung (28) aufweist, die dazu bestimmt sind, den Riegel (6) bei seinem Einführen in das Gehäuse (25) zu führen.

12. Verankerungsvorrichtung nach einem der vorhergehenden Ansprüche, dadurch gekennzeichnet, daß sie Erfassungseinrichtungen des Vorhandenseins des Organs aufweist, das in seiner aktiven Position gleitet.

13. Verankerungvorrichtung nach Anspruch 12, dadurch gekennzeichnet, daß die Erfassungseinrichtungen durch einen Unterbrecher (50) gebildet sind, der in dem genannten Gehäuse (25) angeordnet ist und durch das Gleitorgan betätigt wird.

14. Verankerungsvorrichtung nach einem der vorhergehenden Ansprüche, dadurch gekennzeichnet, daß sie Erfassungseinrichtungen des Vorhandenseins des Bügels in der aktiven Position aufweist.

15. Verankerungsvorrichtung nach Anspruch 14, dadurch gekennzeichnet, daß die genannten Einrichtungen durch einen Unterbrecher (52) gebildet sind, der in dem genannten Gehäuse (25) angeordnet ist und einen Betätigungsarm (53) und einen Drücker (54) aufweist, der aus dem Gehäuse (25) auf der Höhe der aktiven Position des Riegels vorspringt, wobei dieser Drücker und dieser Unterbrecher betätigt werden durch eine Rampe (57) des Bügels (56) bei Erreichen seiner aktiven Position.

**Claims**

1. A device for anchoring a slidable unit comprising a bolt or tongue (6), the device being useable in a passive safety belt device for a motor vehicle seat of the kind comprising a strap (1) forming a shoulder strap wound at one end on a winder (2) and bearing at its free end a buckle (3, 56) cooperating with the bolt or tongue (6), the slidable assembly being mounted to be displaceable in a guide and retaining rail (5) attached to the body of the vehicle (V), between a stand-by position, in which a user has access to the seat (S) and an active position for retaining the user on the seat, as a result of actuating means comprising a belt (13) connecting the slidable assembly to driving means, a member for retaining the tongue or bolt (6) which is rigidly attached to the vehicle body and so cooperates with the tongue in the active position as to resist tensile forces exerted on the tongue, said device comprising means (32) for locking the slidable assembly in the active position and adapted to prevent the displacement thereof in a direction parallel with the guide and retaining rail (5), the retaining member being disposed between the guide rail (5) and the means for driving the slidable assembly, the retaining member comprising a casing (25) comprising a front face (26) formed with a slot (27) through which the tongue (6) projects and communicating with a first opening (28) with which a first lateral face (29) of the casing (25) is formed and which is alligned with the guide and retaining rail (5) to allow the passage of the slidable assembly, the casing (25) comprising a second opening (30) with which a second lateral face (31) thereof is formed and which is adapted to allow the passage of a portion of the belt (13), the locking means being formed by at least one locking member (33, 34) mounted articulated in the front face (26) of the casing adjacent the slot (27), the or each locking member (33, 34) being mounted to be displaced between a retracted position, allowing the tongue (6) to be introduced into or withdrawn from the active position, and a locking position in which active portions (38) of the or each locking member (33, 34) cooperate by engagement with complementary portions (8) of the tongue (6), characterized in that the slot (27) has edges defining two bearing surfaces adapted to cooperate with the tongue to absorb the tensile forces exerted thereon; the or each locking member (33, 34) is mounted in a corresponding recess (35, 36) in the casing (25), with which it cooperates to immobilize the tongue (6) in the active position; the or each locking member (33, 34) is articulated along a tilting axis parallel with the slot (27) and has an end (38) adapted to engage in a recess (8) in the tongue (6); and the first (28) and second (30) openings in the casing (25) are disposed at different distances from the front face (26) thereof, so that the portion of the belt (13) extending between the slidable assembly and the second opening (30) is bent and inclined in relation to such front face (26).

2. An anchoring device according to claim 1, characterized in that the locking means are formed by two locking members (33, 34) disposed on either side of the slot (27) in recesses (35, 36) with which its edges are formed.

3. An anchoring device according to claims 1 or 2, characterized in that it comprises resilient means (42) stressing the or each locking member into its retracted position.

4. An anchoring device according to claim 3, characterized in that the or each locking member is formed by a metal strip comprising at one of its ends a portion bent through 90° and forming a hook (38) forming the active portion of the locking element and adapted to engage in a recess (8) in the torque (6) in the locking position, in its central portion a surface (39) of articulation bearing against corresponding surfaces (40) of an inner member (37) connected to the casing, and at its other end a first bearing surface (41) cooperating with the resilient means (42) urging the locking member into its retracted position and the second bearing surface (43) adapted to cooperate with an actuating member (14) connected to the slidable assembly to displace the locking member and retain the same in its locking position.

5. An anchoring device according to claim 4, characterized in that the first and second bearing surfaces are formed by opposite faces of the metal strip, and the resilient means are formed by a U-shaped spring (42) whose arms bear against the first bearing surfaces of the two locking members.

6. An anchoring device according to claim 5, characterized in that the articulation surface and the second bearing surface of each locking member are formed on its face directed towards the inside of the casing (25); the articulation surface is formed by a first recess (39) formed in the metal strip and cooperating with a first boss (40) of the inner member (37); and the second bearing surface is formed by a flat portion (43) of the metal strip.

7. An anchoring device according to claim 6, characterized in that each locking member comprises, between its articulation surface and its second bearing surface, a second boss (44) adapted to be borne in a recess (45) with the inner member (37) is formed in the retracted position of the or each locking member, such second boss being formed in the or each locking member (33, 34) opposite a second recess (41) forming the first bearing surface of said member.

8. An anchoring device according to claims 1 to 7, characterized in that when a force is exerted on the belt to disengage the slidable assembly from its active position, the actuating member (14) of the locking members (33, 34) is disengaged from its position for retaining said members in the locking position.

9. An anchoring device according to any of claims 4 to 8, characterized in that the actuating member (14) comprises an inclined plane (15a, 15b) adapted to cooperate with the second bearing surface of the or each locking member.

10. An anchoring device according to any of claims 4 to 9, characterized in that the actuating member (14) is moulded on to the belt (13).

11. An anchoring device according to any of the preceding claims, characterized in that the slot (27) has inclined edges (27a, 27b) where it joins the first opening (28), such edges being adapted to guide the tongue (6) in its introduction into the casing (25).

12. An anchoring device according to any of the preceding claims, characterized in that it comprises means for detecting the presence of the slidable member in the active position.

13. An anchoring device according to claim 12, characterized in that the detecting means are formed by a switch (50) disposed in the casing (25) and actuated by the slidable member.

14. An anchoring device according to any of the preceding claims, characterized in that it comprises means for detecting the presence of the buckle in the active position.

15. An anchoring device according to claim 14, characterized in that said means are formed by a switch (52) disposed in the casing (25) and comprising an actuating arm (53) and a pusher (54) projecting out of the casing (25) in line with the active position of the tongue, the pusher and switch being actuated by a ramp (57) on the buckle (56) when the buckle moves into the active position.

FIG.1

FIG.2

10b
9b
11
6
7
8
9
14
12
9a
10a
13
X
X

FIG.3
11
10b
9
14
15a
15b
10a
12
13

FIG.5
5
11
9
6
14
12

18 20
21 17
6 16
19

FIG.4

EP 0 214 002 B1

FIG.6

FIG.7

FIG.14

FIG.8

FIG.15

FIG.9

FIG.10

FIG.11

FIG.12

FIG.13